# EUROPEAN PATENT SPECIFICATION

(11) **EP 1 321 438 B1**
(45) Date of publication and mention of the grant of the patent: **24.02.2010**
(21) Application number: 02258632.5
(22) Date of filing: 13.12.2002
(51) Int. Cl.: C03B 9/353

(54) **Glass container forming machine**
Hohlglasformmaschine
Machine à façonner le verre creux

(30) Priority: 19.12.2001 US 28603
(43) Date of publication of application: 25.06.2003
(73) Proprietor: Emhart Glass S.A., 6330 Cham (CH)
(72) Inventor: Brown, Steven J., North Granby, Connecticut 06060 (US)
(74) Representative: Warren, Anthony Robert

(56) References cited:
- EP-A- 0 274 245
- EP-A- 0 555 955
- EP-A- 0 708 059
- US-A- 4 449 996
- US-A- 4 557 744

## Description

The present invention relates to I.S. glass container forming machines and more particularly to the mold open and close mechanisms of such machines.

In an I.S. machine a gob of molten glass is formed into a parison within a blank mold and the formed parison is transferred to a blow station where the parison is blown within a blow mold into a formed bottle. The blow molds and the blank molds are part of a mold open and close mechanism such as disclosed in US-A-5,830,254, 4,557,744 and 4,449,996, and EP-A-0,274,245, 0,555,955 and 0,708,059.

In the design disclosed in US-A-5,830,254, a mold carrier which, in use, carries one of an opposed pair of mold side portions or halves, is connected to a pair of links via a horizontal rotatable shaft. The links are part of a drive assembly.

The present invention is directed to a mold support mechanism for use with a mold open and close mechanism, generally of the type disclosed in US-A-5,830,254 and as recited in the preamble of claim 1.

In the design disclosed in US-A-5,830,254, the removal of the shaft from the links is necessary in order to permit the separation of the mold carrier from the drive assembly. The entire drive assembly, including the drive assembly housing, could then be removed by loosening blots which secured the drive assembly housing to the top surface of the frame and pulling the housing, with the housed drive assembly, upwardly lifting the motor of the drive assembly up through a hole in the section frame. In this design, the link bearings were hard to maintain.

It is an object of the present invention to provide a mold support mechanism for an I.S. glass container forming machine which enables the mold carrier and drive assembly to be more easily removed.

According to the present invention, there is provided a mold support mechanism as defined in the characterising clause of claim 1.

From another aspect, the present invention provides a method for securing a mold support mechanism to a mold open and close mechanism as defined in claim 5.

Reference will now be made to the accompanying drawings which illustrate a presently preferred embodiment incorporating the principles of the invention, and in which:-
Figure 1 is an oblique view of a mold open and close mechanism of an I.S. (individual section) machine;
Figure 2 is a view similar to that of Figure 1 with the insert assembly being separated from the actuator housing;
Figure 3 is an elevational view showing a shaft supported by a pair of drive links of the insert assembly;
Figure 4 is an exploded oblique view of the supported mold carrier assembly;
Figure 5 is an oblique view of the mold open and close mechanism and a side frame; and
Figure 6 is an oblique view, partly in section, of the insert assembly and a supported mold carrier assembly.

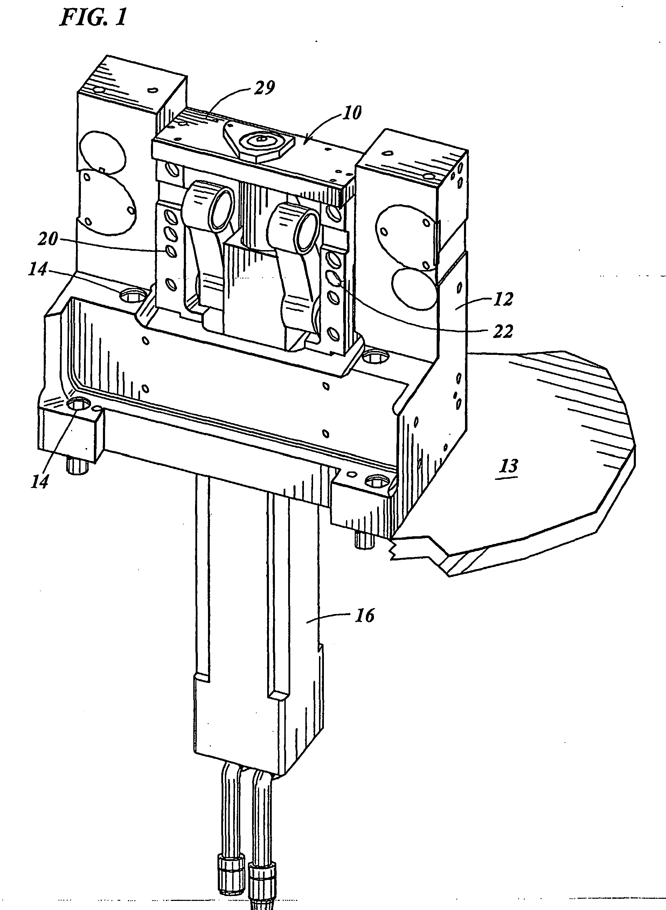

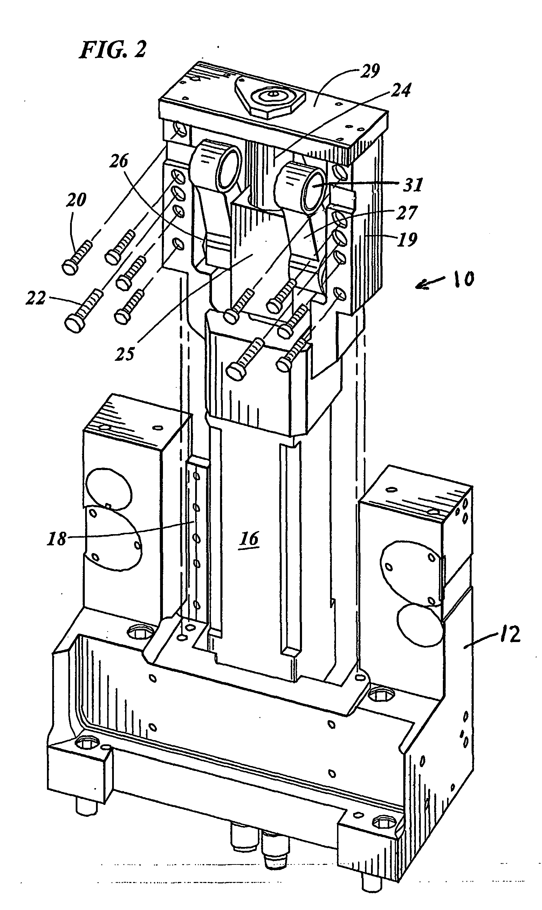

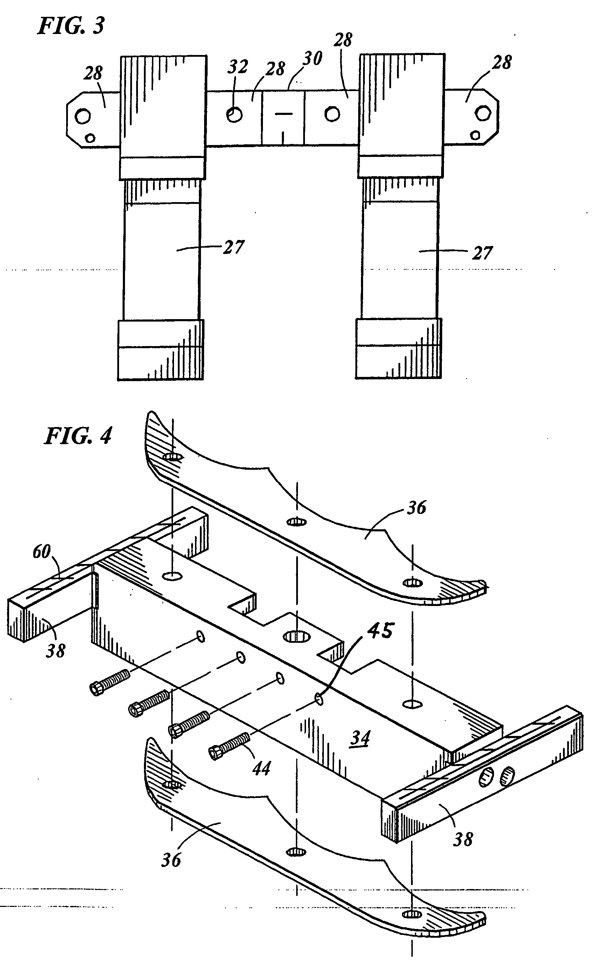

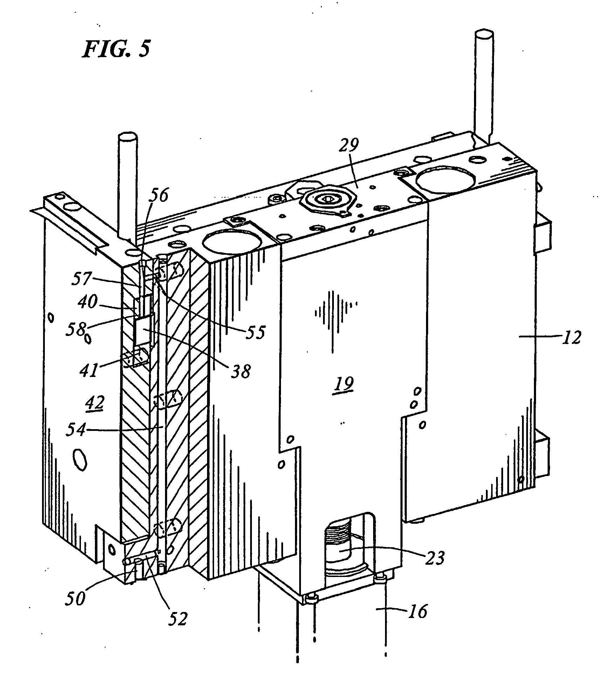

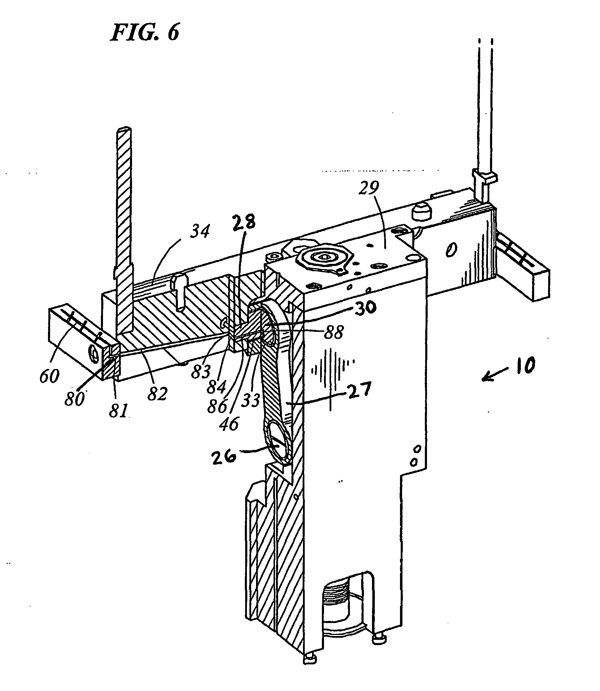

Figure 1 discloses an insert assembly 10 and an actuator housing 12 of a mold support mechanism according to a preferred embodiment of the invention which forms part of a mold open and close mechanism. The actuator housing is mounted on the top wall 13 of a section frame via suitable bolts 14. The top wall has a hole (not shown) through which the motor 16 of the insert assembly 10 can pass. As can be seen from Figure 2, the actuator housing has a pair of vertically extending flanges 18 (one shown) to which the insert assembly housing 19 is secured with suitable bolts 20, so as to be located in a vertically extending opening defined by the actuator housing 12 from which the insert assembly may be lifted from the machine. The drive portion of the insert assembly may therefore be easily removed for repair or replacement. Dowel pins 22 assure proper location of the insert assembly relative to the actuator housing. Secured to the insert assembly housing 19 are the motor 16 and a ball screw 24 which extends between a top plate 29 and a motor coupling 23 (Figure 5). Associated with the ball screw is a nut 25 to which pins 26 are secured for pivotally supporting one end of a pair of drive links 27. A shaft 30 (Figure 3) has a pair of cylindrical bearing surfaces 33 (Figure 6) to be received by the holes 31 in the other end of the drive links 27, and has flat portions 28 at either side of the bearing surfaces 33. Threaded holes 32 are defined in these flat portions.

Operatively associated with this shaft 30 is a mold support mechanism (Figure 4) which has a mold carrier 34 to which upper and lower inserts 36 are secured. When the mold support mechanism is operatively fitted to an I.S. machine, the mold carrier 34, via the inserts 36, carries one of an opposed pair of mold side portions or halves, which cooperates with the other mold side portion or half carried by a second mold support mechanism. Also secured to the mold or insert carrier is an opposed pair of rails 38 (the moveable rails) which are horizontally slidingly displaceable between upper 40 and lower 41 fixed rails (one pair shown) which are removably secured to a side frame 42. The rails support and/or guide the mold carrier, and have a length selected so that when the opposed mold open and close mechanism is fully retracted, the mold carrier movable rails 38 can be pulled free from the fixed rails 40, 41. This permits the release of the mold carrier 34 from the machine upon the removal of bolts 44 which extend through suitable holes 45 in the mold carrier 34 into the threaded holes 32 in the shaft 30, so that the mold support mechanism can be repaired or replaced.

The holes 31 of the link pair 27 remote from the nut 25 are defined by a bearing 46. To achieve lubrication of this bearing, lubricating oil is supplied to an inlet 50 in the actuator housing 12 (Figure 5) which, via a branch 52 supplies a vertical conduit 54. A top horizontal branch 55 communicates with a corresponding branch 56 in the side frame 42 and this branch connects with a vertical conduit 57 in the frame which communicates with a vertical feed hole 58 in the upper fixed rail 40. Oil will be periodically pulsed through this feed conduit onto the top surface of the movable rail 38 (there will always be a portion of the movable rail beneath feed hole 58). The oil collects in a series of grooves 60 cut into the top surface of the movable rail which defines a small oil reservoir. This provides lubrication of the top surface, and oil that drips over the top surface lubricates the top surface of the lower fixed rail 41. Communicating with this reservoir is a vertical inlet conduit 80 (Figure 6) which connects to a horizontal inlet conduit 81. Oil proceeds by gravity to an inclined conduit 82 in the carrier, then through a transverse hole 83 into a coaxial hole 84 in the shaft 30, then to a horizontal feed conduit 86, and then to a vertical outlet conduit 88 which communicates with the surface of the supporting bearing midway along its length.

## Claims

1. A mold support mechanism for use with a mold open and close mechanism having a drive including a drive link (27) having a shaft receiving hole (31), comprising a shaft (30) rotatably mounted in the hole (31) in the drive link via bearing means (33), and an insert or mold carrier (34) secured to the drive link by the shaft (30),
**characterised in that** the shaft (30) has a flat portion (28) adjacent to the bearing means (33) and the insert or mold carrier (34) is releasably securable by fastener means (44) to the flat portion of the shaft so that the carrier is securable to and removable from the shaft without separating the shaft (30) from the hole (31) in the drive link.

2. A mold support mechanism according to claim 1, wherein
the shaft (30) has a plurality of flat portions (28) adjacent to the bearing means (33), the flat portions having fastener receiving holes (32),
the insert or mold carrier (34) includes a plurality of fastener receiving holes (45) selectively locatable coaxial with the fastener receiving holes (32) of the flat portions, and
the fastener means (44) can extend through the carrier fastener receiving holes (45) and into the shaft fastener receiving holes (32) to releasably secure the carrier (34) to the shaft (30).

3. A mold support mechanism according to claim 1 or 2, including a pair of drive links (27) each having a hole (31) for receiving the shaft (30), the holes (31) in the pair of links being mutually coaxial.

4. A mold support mechanism according to claim 3, wherein the shaft (30) has bearing means (33) comprising a pair of bearings associated with each link (27), and has two pairs of flat portions (28), the flat portions of each pair being located on either side of a respective one of the bearings.

5. A method for securing a mold support mechanism to a mold open and close mechanism having a drive link (27) provided with a hole (31) in which a shaft (30) is rotatably mounted via bearing means (33), the mold support mechanism comprising an insert or mold carrier (34) which is secured to the drive link (27) by the shaft (30),
the method being **characterised by**
securing the insert or mold carrier (34) to a flat portion (28) on the shaft (30) adjacent to the bearing means (33) by releasable fastener means (44), and removing the insert or mold carrier (34) from the shaft (30) by releasing the fastener means (44), without separating the shaft from the hole (31) in the drive link (27).

## Patentansprüche

1. Formtragemechanismus zur Verwendung mit einem Formöffnungs- und Schließmechanismus, umfassend einen Antrieb mit einer Antriebsverbindung (27), die ein Loch (31) zur Aufnahme einer Welle aufweist, wobei die Welle (30) über eine Lagereinrichtung (33) drehbar im Loch (31) in der Antriebsverbindung befestigt ist, und einen Einsatz oder Formträger (34), der durch die Welle (30) an der Antriebsverbindung gesichert ist,
**dadurch gekennzeichnet, daß** die Welle (30) einen flachen Abschnitt (28) neben der Lagereinrichtung (33) umfaßt und daß der Einsatz oder Formträger (34) über eine Befestigungseinrichtung (44) lösbar am flachen Abschnitt der Welle befestigt werden kann, sodaß der Träger an der Welle gesichert und von ihr gelöst werden kann, ohne daß die Welle (30) aus dem Loch (31) in der Antriebsverbindung entfernt werden muß.

2. Formtragemechanismus nach Anspruch 1, wobei die Welle (30) eine Mehrzahl von flachen Abschnitten (28) neben der Lagereinrichtung (33) umfaßt, wobei die flachen Abschnitte Löcher (32) zum Aufnehmen der Befestigung aufweisen,
der Einsatz oder Formträger (34) eine Mehrzahl von Löchern (45) zum Aufnehmen der Befestigung aufweist, die wahlweise koaxial zu den Löchern (32) der flachen Abschnitte zum Aufnehmen der Befestigung angeordnet werden können,
die Befestigungseinrichtung (44) sich durch die Löcher (45) zum Aufnehmen der Befestigung und in die Löcher (32) zum Aufnehmen der Befestigung erstrecken kann, um den Träger (34) an der Welle (30) zu sichern.

3. Formtragemechanismus nach Anspruch 1 oder 2, umfassend ein Paar von Antriebsverbindungen (27), von denen jede ein Loch (31) zum Aufnehmen der Welle (30) aufweist, wobei die Löcher (31) in dem Paar von Verbindungen zueinander koaxial verlaufen.

4. Formtragemechanismus nach Anspruch 3, wobei die Welle (30) eine Lagereinrichtung (33) aufweist, die ein Paar von Lagern umfaßt, die jeder Verbindung (27) zugeordnet sind, sowie zwei Paare von flachen Abschnitten (28), wobei die flachen Abschnitte jedes Paares auf beiden Seiten des jeweiligen Lagers angeordnet sind.

5. Verfahren zum Sichern eines Formtragemechanismus' an einem Formöffnungs- und Schließmechanismus, umfassend eine Antriebsverbindung (27), die ein Loch (31) aufweist, in dem eine Welle (30) über eine Lagereinrichtung (33) drehbar befestigt ist, wobei der Formtragemechanismus einen Einsatz oder Formträger (34) umfaßt, der durch die Welle (30) an der Antriebsverbindung (27) gesichert ist, wobei
das Verfahren **gekennzeichnet ist durch**
Sichern des Einsatzes oder Formträgers (34) über eine lösbare Befestigungseinrichtung (44) an einem flachen Abschnitt an der Welle und Entfernen des Einsatzes oder Trägers von der Welle (30), indem die Befestigungseinrichtung (44) gelöst wird, ohne daß die Welle (30) aus dem Loch (31) in der Antriebsverbindung entfernt wird.

## Revendications

1. Mécanisme de support de moule destiné à être utilisé avec un mécanisme d'ouverture et de fermeture de moule ayant un entraînement comprenant une liaison d'entraînement (27) ayant un trou de réception d'arbre (31), comprenant un arbre (30) monté en rotation dans le trou (31) dans la liaison d'entraînement via des moyens de palier (33) et un support de moule ou d'insert (34) fixé sur la liaison d'entraînement par l'arbre (30),
**caractérisé en ce que** l'arbre (30) a une partie plate (28) adjacente aux moyens de palier (33) et le support de moule ou d'insert (34) peut être fixé de manière amovible par des moyens de fixation (44) sur la partie plate de l'arbre de sorte que le support peut être fixé sur et amovible de l'arbre sans séparer l'arbre (30) du trou (31) dans la liaison d'entraînement.

2. Mécanisme de support de moule selon la revendication 1, dans lequel l'arbre (30) a une pluralité de parties plates (28) adjacentes aux moyens de palier (33), les parties plates ayant des trous de réception de fixation (32),
le support de moule ou d'insert (34) comprend une pluralité de trous de réception de fixation (45) pouvant être positionnés sélectivement de manière coaxiale par rapport aux trous de réception de fixation (32) des parties plates, et
les moyens de fixation (44) peuvent s'étendre à travers les trous de réception de fixation (45) du support et dans les trous de réception de fixation (32) de l'arbre pour fixer de manière amovible le support (34) sur l'arbre (30).

3. Mécanisme de support de moule selon la revendication 1 ou 2, comprenant une paire de liaisons d'entraînement (27) ayant chacune un trou (31) pour recevoir l'arbre (30), les trous (31) dans la paire de liaisons étant mutuellement coaxiaux.

4. Mécanisme de support de moule selon la revendication 3, dans lequel l'arbre (30) a des moyens de palier (33) comprenant une paire de paliers associés à chaque liaison (27), et a deux paires de parties plates (28), les parties plates de chaque paire étant positionnées de chaque côté d'un palier respectif des paliers.

5. Procédé pour fixer un mécanisme de support de moule sur un mécanisme d'ouverture et de fermeture de moule ayant une liaison d'entraînement (27) prévue avec un trou (31) dans lequel un arbre (30) est monté de manière rotative via des moyens de palier (33), le mécanisme de support de moule comprenant un support de moule ou d'insert (34) qui est fixé sur la liaison d'entraînement (27) par l'arbre (30),
le procédé étant **caractérisé par** les étapes consistant à :
fixer le support de moule ou d'insert (34) sur une partie plate (28) sur l'arbre (30) adjacent aux moyens de palier (33) par des moyens de fixation (44) amovibles, et retirer le support de moule ou d'insert (34) de l'arbre (30) en débloquant les moyens de fixation (44) sans séparer l'arbre du trou (31) dans la liaison d'entraînement (27).
